# EUROPÄISCHE PATENTSCHRIFT

(11) **EP 1 391 090 B1**
(45) Veröffentlichungstag und Bekanntmachung des Hinweises auf die Patenterteilung: **14.12.2005**
(21) Anmeldenummer: 02774011.7
(22) Anmeldetag: 06.05.2002
(51) Int. Cl.: H04L 12/56

(54) **DATENÜBERTRAGUNGSSYSTEM MIT HÖHER DATENÜBERTRAGUNGSRATE**
DATA TRANSMISSION SYSTEM HAVING A HIGH DATA TRANSMISSION RATE
SYSTEME DE TRANSMISSION DE DONNEES A HAUT DEBIT

(30) Priorität: 28.05.2001 DE 10125909
(43) Veröffentlichungstag der Anmeldung: 25.02.2004
(73) Patentinhaber: Infineon Technologies AG, 81669 München (DE)
(72) Erfinder: GERSEMSKY, Frank, 44789 Bochum (DE); NEUBAUER, André, 47807 Krefeld (DE); VAN WAASEN, Stefan, 47178 Duisburg (DE)
(74) Vertreter: Graf Lambsdorff, Matthias
(86) Internationale Anmeldenummer: PCT/DE2002/001624
(87) Internationale Veröffentlichungsnummer: WO 2002/098067

(56) Entgegenhaltungen:
- WO-A-00/70811
- KAROL M J ET AL: "TIME-FREQUENCY-CODE SLICING: EFFICIENTLY ALLOCATING THE COMMUNICATIONS SPECTRUM TO MULTIRATE USERS" IEEE TRANSACTIONS ON VEHICULAR TECHNOLOGY, IEEE INC. NEW YORK, US, Bd. 46, Nr. 4, 1. November 1997 (1997-11-01), Seiten 818-826, XP000754819 ISSN: 0018-9545
- HAARTSEN J: "BLUETOOTH - THE UNIVERSAL RADIO INTERFACE FOR AD HOC, WIRELESS CONNECTIVITY" ON - ERICSSON REVIEW, ERICSSON. STOCKHOLM, SE, Nr. 3, 1998, Seiten 110-117, XP000783249 ISSN: 0014-0171

## Beschreibung

Die Erfindung betrifft ein digitales Datenübertragungssystem, welches mindestens zwei Stationen aufweist, zwischen denen Datenpakete über Funk ausgetauscht werden. Außerdem bezieht sich die Erfindung auf ein Verfahren zur digitalen Übertragung von Datenpaketen zwischen mindestens zwei Stationen über Funk.

Derartige Datenübertragungssysteme werden häufig eingesetzt, wenn Datenpakete über kurze Distanzen über Funk ausgetauscht werden sollen. Beispielsweise geschieht dieses beim Datenaustausch zwischen dem Basisteil und dem Mobilteil eines schnurlosen Telefons oder zwischen einem Computer und Peripheriegeräten. Solche Datenübertragungssysteme, bei denen Daten drahtlos über kurze Entfernungen von nur wenigen Metern zwischen einer Basisstation und Mobilstationen ausgetauscht werden, werden als Piconetze bezeichnet. Piconetze können nach verschiedenen Standards, wie zum Beispiel dem Bluetooth- oder dem DECT-Standard (Digital European Cordless Telecommunications), betrieben werden.

Eine Datenübertragung von der Basisstation zu den Mobilstationen wird Downlink genannt. Der umgekehrte Fall der Datenübertragung von den Mobilstationen zu der Basisstation wird als Uplink bezeichnet. Üblicherweise werden für die Datenübertragung Zeitschlitzverfahren verwendet. Bei Zeitschlitzverfahren werden den Down- und Uplinks Zeitschlitze (Slots) mit einer bestimmten zeitlichen Länge zugewiesen. Als Zeitschlitzverfahren kommen häufig das TDMA-Verfahren (Time Division Multiple Access) als Mehrfach-Zugriffsverfahren sowie das TDD-Verfahren (Time Division Duplex) als Duplexverfahren zur Bildung eines bidirektionalen Kanals zwischen der Basisstation und den Mobilstationen zum Einsatz.

Die für die Datenübertragung in Piconetzen zur Verfügung stehenden Frequenzen sind durch die ISM-Frequenzbänder (Industrial, Scientific and Medical) festgelegt. Die ISM-Frequenzbänder sind für die funkorientierte und lizenzlose Anwendung schwacher Sendeleistung reserviert.

Für die Nutzung der ISM-Frequenzbänder hat die zuständige Regulierungsbehörde, die Federal Communications Commission (FCC), Regeln aufgestellt, in welcher Weise der Datenaustausch zu erfolgen hat. Eine Regel besagt, daß die drahtlose Datenübertragung entsprechend einem Frequenzsprungverfahren (FHSS; Frequency Hopping Spread Spectrum) zu erfolgen hat. Außerdem wird durch die FCC-Regeln festgelegt, wie viele Frequenzwechsel innerhalb einer bestimmten Zeitspanne durchzuführen sind.

Ein solches System ist aus WO-A-0070811 gekannt.

Die FCC-Regeln erfordern wegen des Einsatzes eines Frequenzsprungverfahrens die Verwendung einer Mindestanzahl von nicht-überlappenden Frequenzkanälen innerhalb eines zur Verfügung stehenden Frequenzbandes. Beispielsweise kann ein solches Frequenzband im Bereich von 2400,0 MHz bis 2483,5 MHz liegen. Um einen schmalbandigen Sendebereich innerhalb eines Frequenzkanals zu gewährleisten, wird beispielsweise bei digitalen schnurlosen Kommunikationssystemen, die z.B. auf dem Bluetooth-Standard basieren, ein zweiwertiges GFSK-Modulationsverfahren (Gaussian Frequency Shift Keying) mit einem Symboltakt von 1 MHz und einem Modulationsindex η im Bereich von 0,28 bis 0,35 verwendet. Bei dem GFSK-Modulationsverfahren wird ein Gauß-Filter zur Begrenzung der Frequenzbandbreite eingesetzt, so daß ein Übersprechen zwischen den einzelnen Frequenzkanälen unterdrückt wird.

Die einzelnen Frequenzkanäle werden bei einem Frequenzsprungverfahren in einer pseudo-zufälligen Weise angesprungen. Dazu wird ein Algorithmus verwendet, welcher die zeitliche Sequenz der Kanalmittenfrequenzen vorgibt. Als Kanalmittenfrequenz wird die in der Mitte eines Frequenzkanals liegende Frequenz bezeichnet.

Gegenwärtig werden bei digitalen schnurlosen Kommunikationssystemen, die beispielsweise auf dem Bluetooth-Standard basieren, unter Anwendung von Frequenzsprungverfahren Daten standardmäßig mit Raten von 1 Mbit/s übertragen. Die Methodik, um höhere Datenübertragungsraten zu ermöglichen, besteht im wesentlichen in der Verwendung höherwertiger Modulationsverfahren, wie zum Beispiel der π/4-DQPSK- (Differential Quadratur Phase Shift Keying), π/8-DBPSK- oder M-FSK-Verfahren (Frequency Shift Keying), bei denen anstelle eines zweiwertigen Bits ein M-wertiges Symbol mit M = 2^{m} übertragen wird. Höherwertige Modulationsverfahren erfordern im allgemeinen eine Modifikation des bei digitalen schnurlosen Kommunikationssystemen verwendeten zweiwertigen GFSK-Modulationsverfahrens sowie der zugehörigen Sende- und Empfangsstationen.

Um im Bluetooth-Standard höhere Datenübertragungsraten zu erzielen, bietet es sich ebenfalls an, bei einem unveränderten GFSK-Modulationsverfahren die Symbolrate während der gesamten Datenübertragung um den Faktor N zu erhöhen. Die Symbolrate ist dabei die Rate, mit welcher die Phase der Schwingung, die zur Datenübertragung als Trägerfrequenz verwendet wird, moduliert wird. Dadurch wird allerdings auch die erforderliche Bandbreite der Frequenzkanäle um den Faktor N vergrößert. Wird das Frequenzsprungverfahren der erhöhten Symbolrate nicht angepaßt, so ergeben sich überlappende Frequenzkanäle, welche nach den FCC-Regeln unzulässig sind. Daher muß der Algorithmus, welcher die Abfolge der Kanalmittenfrequenzen festlegt, modifiziert werden, so daß die Frequenzkanäle eine der erhöhten Symbolrate angepaßte größere Bandbreite aufweisen. Der Nachteil einer derartigen Erhöhung der Symbolrate liegt in der Beeinträchtigung des Betriebs des Piconetzes. Besteht beispielsweise eine höherratige Datenverbindung zwischen der Basisstation und einer der Mobilstationen, so ist es für die übrigen Mobilstationen unmöglich, auf die höherratige Datenverbindung zu synchronisieren, da einerseits die Kanalmittenfrequenz aufgrund der FCC-Anforderungen für eine hochratige Verbindung geändert werden muß und andererseits die Symbolrate nicht mit der erwarteten Symbolrate von beispielsweise 1 Mbit/s übereinstimmt.

Die Aufgabe der Erfindung ist es daher, Mittel für ein Datenübertragungssystem zu schaffen, um höhere Datenübertragungsraten unter Beachtung der FCC-Regeln zu ermöglichen, ohne dabei den normalen Betrieb des Datenübertragungssystems zu stören.

Die der Erfindung zugrundeliegende Aufgabenstellung wird durch die Merkmale der unabhängigen Patentansprüche gelöst. Vorteilhafte Weiterbildungen und Ausgestaltungen sind in den Unteransprüchen angegeben.

Ein erfindungsgemäßes Datenübertragungssystem weist eine Basisstation und mindestens eine Mobilstation auf. Zwischen der Basisstation und der mindestens einen Mobilstation können Datenpakete über Funk entsprechend einem Zeitschlitzverfahren ausgetauscht werden. Ein wesentlicher Gedanke der Erfindung besteht darin, daß das Datenübertragungssystem erste Mittel aufweist, mittels welchen ein erster Teil eines Datenpakets mit einer vorgegebenen ersten Symbolrate bei einer ersten Übertragungsfrequenz übertragen wird, und daß das Datenübertragungssystem des weiteren zweite Mittel aufweist, mittels welchen ein zweiter Teil des Datenpakets mit einer zweiten Symbolrate bei einer zweiten Übertragungsfrequenz übertragen wird. Die erste bzw. zweite Symbolrate ist hierbei jeweils die Rate, mit der die Phase der zur Datenübertragung verwendeten Schwingung moduliert wird. Diese Schwingung weist dabei die erste bzw. zweite Übertragungsfrequenz, welche in der Regel die Kanalmittenfrequenz ist, auf.

Das erfindungsgemäße Datenübertragungssystem hat zum Vorteil, daß es höhere Datenübertragungsraten als viele herkömmliche Datenübertragungssysteme ermöglicht, da beispielsweise die zweite Symbolrate größer als die erste Symbolrate sein kann. Dazu wird der erste Teil des Datenpakets mit der vorgegebenen ersten Symbolrate bei der ersten Übertragungsfrequenz übertragen. Die erste Symbolrate ist üblicherweise die Symbolrate, die standardmäßig beim Betrieb des Datenübertragungssystems verwendet wird. Während der Übertragung des ersten Teils des Datenpakets haben somit sämtliche Empfangsstationen die Möglichkeit, auf die Datenübertragung aufzusynchronisieren. Der zweite Teil des Datenpakets, welcher in der Regel die Nutzdaten des Datenpakets enthält, wird daraufhin mit der höheren zweiten Symbolrate übertragen. Dadurch ergibt sich insgesamt eine höhere Datenübertragungsrate für das gesamte Datenpaket im Vergleich zu der herkömmlichen Übertragung von Datenpaketen. Es ist jedoch zu bedenken, daß bei einer erhöhten zweiten Symbolrate auch die zweite Übertragungsfrequenz einen anderen Wert als die erste Übertragungsfrequenz aufweisen muß, damit ein Überlappen von Frequenzkanälen gemäß den FCC-Regeln ausgeschlossen wird. Durch geeignete Informationen im ersten Teil des Datenpakets können sämtliche Empfangsstationen über die zweite Symbolrate und eventuell über die damit verbundene zweite Übertragungsfrequenz unterrichtet werden. Somit bleibt der normale Betrieb des Datenübertragungssystems, der normalerweise bei der vorgegebenen ersten Symbolrate erfolgt, ungestört.

Ein weiterer Vorteil des erfindungsgemäßen Datenübertragungssystems ist, daß die Datenübertragungsrate erhöht wird, ohne daß dazu das verwendete Modulationsverfahren verändert werden muß. So kann beispielsweise bei digitalen schnurlosen Kommunikationssystemen, die nach dem Bluetooth-Standard arbeiten, das zweiwertige GFSK-Modulationsverfahren beibehalten werden.

Um zu gewährleisten, daß alle Empfangsstationen auf eine eventuell höhere zweite Symbolrate und eine damit verbundene im Vergleich zur ersten Übertragungsfrequenz veränderte zweite Übertragungsfrequenz aufsynchronisieren können, beinhaltet der erste Teil des Datenpakets vorteilhafterweise Informationen über die zweite Symbolrate. Insbesondere kann der erste Teil des Datenpakets auch Informationen über die zweite Übertragungsfrequenz enthalten. Dieses ist nicht zwingend notwendig, da die zweite Übertragungsfrequenz auch mit der Kenntnis der zweiten Symbolrate und einem Algorithmus für die zeitliche Abfolge der ersten Übertragungsfrequenzen berechnet werden kann.

Gemäß einer vorteilhaften Ausgestaltung der Erfindung wird zwischen der Übertragung des ersten und des zweiten Teils des Datenpakets ein Schutzzeitintervall eingehalten. Während des Schutzzeitintervalls erfolgt keine Datenübertragung. Um einen eventuell erforderlichen Wechsel der Übertragungsfrequenzen zwischen der Übertragung der beiden Teile des Datenpakets bewerkstelligen zu können, müssen die Sende- und Empfangseinrichtungen üblicherweise auf die neue Übertragungsfrequenz eingeschwungen werden. Diesem zeitbedürftigen Einschwingvorgang wird durch das Einhalten des Schutzzeitintervalls Rechnung getragen.

Eine weitere vorteilhafte Ausgestaltung der Erfindung sieht vor, daß die Basisstation und die mindestens eine Mobilstation jeweils einen lokalen Oszillator aufweisen. Die Frequenz des lokalen Oszillators dient im Sendebetrieb dazu, die Basisbandsignale auf die jeweilige Übertragungsfrequenz heraufzumischen. Im Empfangsbetrieb werden empfangene Signale durch die lokale Oszillatorfrequenz auf ein Zwischenfrequenzband herabgemischt. Lokale Oszillatoren können durch kostengünstige elektronische Bauelemente realisiert werden.

Vorteilhafterweise sind die lokalen Oszillatoren jeweils in einen Phasenregelkreis (PLL; Phase Locked Loop) eingebunden. Der Phasenregelkreis regelt die Frequenz des lokalen Oszillators auf die Frequenz eines Bezugsoszillators und zwar so genau, daß die Phasendifferenz erhalten bleibt. Durch den Phasenregelkreis läßt sich sowohl eine Frequenz empfangen als auch eine gewünschte Frequenz erzeugen.

Eine bevorzugte Ausgestaltung der Erfindung ist dadurch gekennzeichnet, daß die Basisstation und die mindestens eine Mobilstation jeweils einen Filter aufweisen, welcher zur empfangsseitigen Selektion des Frequenzkanals dient. Die Bandbreite des Filters wird bei einer Änderung der Übertragungsfrequenz während des Schutzzeitintervalls ebenfalls auf die neue Bandbreite der zweiten Übertragungsfrequenz abgestimmt.

Gemäß weiterer bevorzugter Ausgestaltungen der Erfindung werden im ersten Teil eines Datenpakets Identifizierungsinformationen und ein erster Datenpaketkopf übertragen. Anhand der Identifizierungsinformationen erkennt der jeweilige Empfänger den Beginn der Übertragung eines für das zugehörige Datenübertragungssystem bestimmten Datenpakets. Der erste Datenpaketkopf enthält beispielsweise Informationen über die zweite Symbolrate, den Adressaten des Datenpakets und eventuell auch über die zweite Übertragungsfrequenz.

Bei einer besonders bevorzugten Ausgestaltung der Erfindung ist vorgesehen, daß im zweiten Teil des Datenpakets ein Synchronisationswort übertragen wird, welches vorzugsweise zu Beginn des zweiten Teils ausgesendet wird. Das Synchronisationswort dient zur Synchronisation des Senders und des Empfängers auf die zweite Symbolrate. Diese Synchronisation verhindert eventuelle Datenverluste. Nach dem Synchronisationswort kann im zweiten Teil des Datenpakets ein zweiter Datenpaketkopf vorgesehen sein, welcher weitere Informationen zur Verbindungssteuerung enthält. Anschließend werden die Nutzdaten übertragen.

Vorteilhafterweise haben die Basisstation und die mindestens eine Mobilstation jeweils Zugriff auf einen Algorithmus, mit welchem sich die Sequenz der ersten Übertragungsfrequenzen berechnen läßt. Des weiteren kann vorgesehen sein, daß die Basisstation und die mindestens eine Mobilstation ebenfalls Zugriff auf einen weiteren Algorithmus haben, welcher die Berechnung der zweiten Übertragungsfrequenz ermöglicht.

Das erfindungsgemäße Datenübertragungssystem läßt sich beispielsweise in digitalen schnurlosen Kommunikationssystemen mit geringer Reichweite, wie zum Beispiel schnurlosen Telefonen mit einem oder mehreren Mobilteilen, einsetzen. Eine weitere Anwendungsmöglichkeit stellen Computer-gesteuerte Spielesysteme dar. Die Mobilstationen wären hier die Gamepads der einzelnen Mitspieler. Aufgrund der hohen Datenübertragungsrate ist die Verwendung des erfindungsgemäßen Datenübertragungssystems besonders vorteilhaft bei Systemen, an die eine Echtzeitanforderung gestellt wird.

Ein weiterer Aspekt der Erfindung betrifft ein Verfahren zur Funkübertragung von Datenpaketen zwischen einer Basisstation und mindestens einer Mobilstation. Dazu wird zunächst ein erster Teil eines Datenpakets mit einer vorgegebenen ersten Symbolrate bei einer ersten Übertragungsfrequenz übertragen. Anschließend wird ein zweiter Teil des Datenpakets mit einer zweiten Symbolrate bei einer zweiten Übertragungsfrequenz übertragen.

Von Vorteil ist das erfindungsgemäße Verfahren, da dadurch beispielsweise nicht das gesamte Datenpaket mit nur einer vorgegebenen Symbolrate übertragen werden muß, sondern im zweiten Teil eine höhere zweite Symbolrate möglich ist. Durch die Verwendung einer Standardsymbolrate als erster Symbolrate wird den Empfangsstationen die Möglichkeit gegeben, auf die versandten Datenpakete aufzusynchronisieren.

Die Erfindung wird nachfolgend unter Bezugnahme auf die Zeichnungen näher erläutert. In diesen zeigen:
- Fig. 1: den Aufbau eines aus einer Basisstation und vier Mobilstationen bestehenden Datenübertragungssystems gemäß dem Stand der Technik; und
- Fig. 2: ein Schaubild einer Rahmenstruktur zur Datenübertragung eines erfindungsgemäßen Datenübertragungssystems.

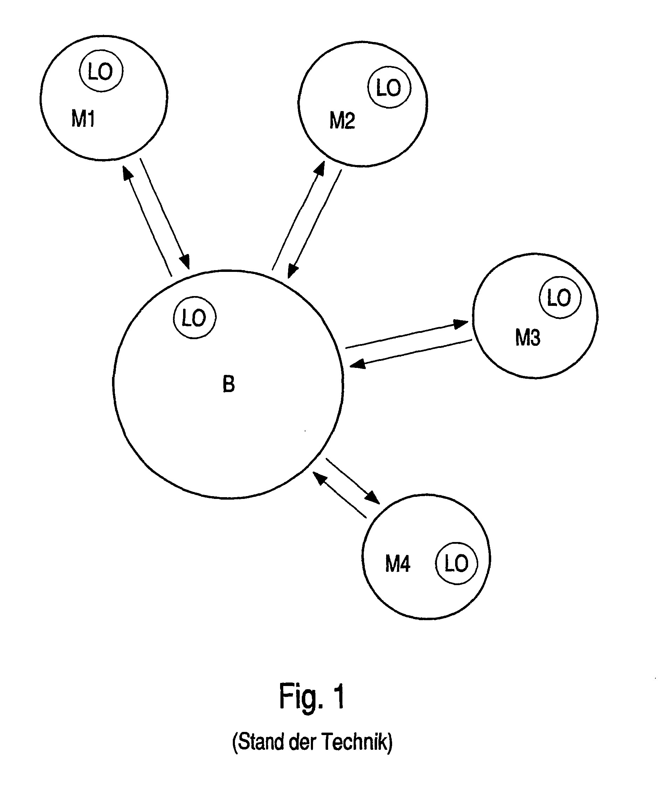

Fig. 1 zeigt ein bekanntes Datenübertragungssystem, welches eine Basisstation B und beispielsweise vier Mobilstationen Mi (i = 1,..., 4) umfaßt. Die Basisstation kann über Funk Daten an jede der Mobilstationen Mi übertragen. Ebenso können die Mobilstationen Mi Daten über Funk an die Basisstation B übermitteln. Zur Datenübertragung über Funk stehen der Basisstation B und den Mobilstationen Mi jeweils ein lokaler Oszillator LO zur Verfügung. Ein derartiges Datenübertragungssystem bestehend aus einer Basisstation B und N Mobilstationen Mi wird als Piconetz bezeichnet. Piconetze weisen eine nur geringe Reichweite auf.

Bei dem in Fig. 1 dargestellten Piconetz weisen die Basisstation B und sämtliche Mobilstationen Mi jeweils Sende- und Empfangseinrichtungen auf. Es kann allerdings auch vorgesehen sein, daß beispielsweise lediglich die Basisstation B eine Sendeeinrichtung umfaßt, und nur von der Basisstation B Daten an die Mobilstationen Mi übertragbar sind.

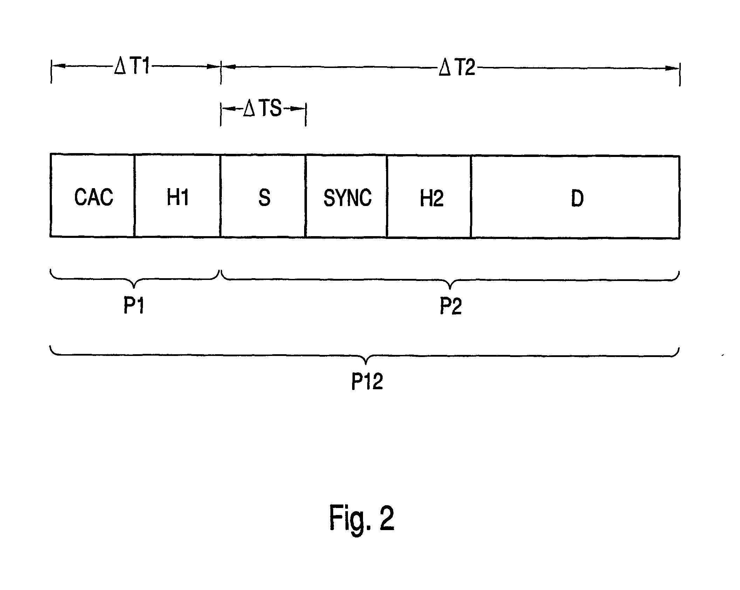

Fig. 2 zeigt eine Rahmenstruktur eines Datenpakets P12, welches in einem erfindungsgemäßen Datenübertragungssystem zwischen der Basisstation B und den Mobilstationen Mi über Funk austauschbar ist. Beispielsweise soll die Übertragung der Datenpakete P12 im 2,4 GHz-ISM-Frequenzband erfolgen. Die FCC-Regeln besagen, daß die Übertragungsfrequenz innerhalb des Frequenzbands nach einer bestimmten Zeit gemäß einem Frequenzsprungverfahren variiert werden muß. Dazu ist das Frequenzband in Frequenzkanäle aufgeteilt, welche sich nicht überlappen. Die in der Mitte eines Frequenzkanals liegende Frequenz wird als Übertragungsfrequenz bezeichnet.

Zu Beginn der Übertragung des vorliegenden Datenpakets P12 wird während einer Zeit ΔT1 ein Teil P1 des Datenpakets P12 mit einer Symbolrate R1 bei einer Übertragungsfrequenz F1 beispielsweise von der Basisstation B ausgesendet und von den Mobilstationen Mi empfangen. Die Symbolrate R1 beträgt als Standard-Symbolrate 1 Mbit/s. Nach dem Bluetooth-Standard werden zu Beginn des Teils P1 Identifizierungsinformationen CAC (Channel Access Code) des Piconetzes gesendet, danach folgt ein Datenpaketkopf H1 (Header). Der Datenpaketkopf H1 kann beispielsweise Informationen über die Symbolrate R2 enthalten, mit welcher ein dem Teil P1 folgender Teil P2 des Datenpakets P12 während einer Zeit ΔT2 übertragen werden soll. In der Regel wird der Teil P2 höherratiger als der Teil P1 übertragen, so daß das Datenpaket P12 insgesamt mit einer hohen Datenübertragungsrate versendet wird. Da eine höhere Symbolrate R2 eine größere Bandbreite der Übertragungsfrequenz bedingt, muß für den Teil P2 des Datenpakets P12 eine neue Übertragungsfrequenz F2 gewählt werden, um den FCC-Forderungen nach nicht-überlappenden Frequenzbändern zu genügen.

Aus diesem Grund wird der Teil P2 von einem Schutzzeitintervall S angeführt. Während der für das Schutzzeitintervall S eingeplanten Zeit ΔTS erfolgt keine Datenübertragung. Das Schutzzeitintervall S dient zum Einschwingen der lokalen Oszillatoren LO auf die Übertragungsfrequenz F2 sowie zur Erhöhung der Bandbreite der empfangsseitigen Filter zur Selektion des Frequenzkanals.

Anschließend an das Schutzzeitintervall S wird von der Mobilstation B ein Synchronisationswort SYNC ausgesendet. Das Synchronisationswort SYNC dient zur Symbolsynchronisation auf die Symbolrate R2. Danach folgen ein Datenpaketkopf H2 mit weiteren Steuerungsinformationen und Nutzdaten D.

Die Datenmenge, welche im Teil P1 des Datenpakets P12 übertragen wird, ist wesentlich geringer als die Datenmenge des Teils P2. Aufgrund der hohen Symbolrate R2, mit welcher der Teil P2 übertragen wird, ergibt sich insgesamt ein hohe Datenübertragungsrate des Datenpakets P12.

## Patentansprüche

1. Datenübertragungssystem, welches eine Basisstation (B) und mindestens eine Mobilstation (Mi) aufweist, zwischen welchen Datenpakete (P12) entsprechend einem Zeitschlitzverfahren über Funk übertragbar sind, mit
- ersten Mitteln zur Übertragung eines ersten Teils (P1) eines Datenpakets (P12) mit einer vorgegebenen ersten Symbolrate (R1) bei einer ersten Übertragungsfrequenz (F1), und
- zweiten Mitteln zur Übertragung eines zweiten Teils (P2) des Datenpakets (P12) mit einer zweiten Symbolrate (R2) bei einer zweiten Übertragungsfrequenz (F2).

2. Datenübertragungssystem nach Anspruch 1,
**dadurch gekennzeichnet,**
- **daß** der erste Teil (P1) des Datenpakets (P12) Informationen über die zweite Symbolrate (R2) und insbesondere über die zweite Übertragungsfrequenz (F2) enthält.

3. Datenübertragungssystem nach Anspruch 1 oder 2,
**gekennzeichnet durch,**
- dritte Mittel zum Erzeugen eines Schutzzeitintervalls (S) zwischen dem ersten Teil (P1) und dem zweiten Teil (P2) des Datenpakets (P12).

4. Datenübertragungssystem nach einem oder mehreren der vorhergehenden Ansprüche,
**dadurch gekennzeichnet,**
- **daß** die zweite Symbolrate (R2) größer als die erste Symbolrate (R1) ist.

5. Datenübertragungssystem nach einem oder mehreren der vorhergehenden Ansprüche,
**dadurch gekennzeichnet,**
- **daß** die Basisstation (B) und die mindestens eine Mobilstation (Mi) jeweils einen lokalen Oszillator (LO) aufweisen.

6. Datenübertragungssystem nach Anspruch 5,
**dadurch gekennzeichnet,**
- **daß** jeder lokale Oszillator (LO) jeweils mit einem Phasenregelkreis in Verbindung steht.

7. Datenübertragungssystem nach einem oder mehreren der vorhergehenden Ansprüche,
**dadurch gekennzeichnet,**
- **daß** die Basisstation (B) und die mindestens eine Mobilstation (Mi) jeweils einen Filter zur empfangsseitigen Selektion der Übertragungsfrequenz (F1, F2) aufweisen.

8. Datenübertragungssystem nach einem oder mehreren vorhergehenden Ansprüche,
**dadurch gekennzeichnet,**
- **daß** die ersten Mittel Mittel zur Erzeugung einer Identifizierungsinformation (CAC) zur Erkennung der Zusammengehörigkeit der Basisstation (B) und der mindestens einen Mobilstation (Mi) aufweisen.

9. Datenübertragungssystem nach einem oder mehreren vorhergehenden Ansprüche,
**dadurch gekennzeichnet,**
- **daß** die ersten Mittel Mittel zur Erzeugung eines ersten Datenpaketkopfs (H1) aufweisen.

10. Datenübertragungssystem nach einem oder mehreren vorhergehenden Ansprüche,
**dadurch gekennzeichnet,**
- **daß** die zweiten Mittel Mittel zur Erzeugung eines Synchronisationsworts (SYNC) zur Synchronisation der Basisstation (B) mit der mindestens einen Mobilstation (Mi) auf die zweite Symbolrate (R2) aufweisen.

11. Datenübertragungssystem nach einem oder mehreren vorhergehenden Ansprüche,
**dadurch gekennzeichnet,**
- **daß** die zweiten Mittel Mittel zur Erzeugung eines zweiten Datenpaketkopfs (H2) und Mittel zur Übertragung von Nutzdaten (D) aufweisen.

12. Datenübertragungssystem nach einem oder mehreren vorhergehenden Ansprüche,
**dadurch gekennzeichnet,**
- **daß** in die Basisstation (B) und in die mindestens eine Mobilstation (Mi) jeweils ein Algorithmus zur Berechnung der Abfolge der ersten Übertragungsfrequenzen (F1) und ein Algorithmus zur Berechnung der zweiten Übertragungsfrequenz (F2) implementiert ist.

13. Datenübertragungssystem nach einem oder mehreren vorhergehenden Ansprüche,
**dadurch gekennzeichnet,**
- **daß** das Datenübertragungssystem
- in digitalen schnurlosen Kommunikationssystemen oder
- in Computer-gesteuerten Unterhaltungssystemen, insbesondere in Computer-gesteuerten Spielesystemen, oder
- in Systemen mit Echtzeitanforderungen einsetzbar ist.

14. Verfahren zur Funkübertragung von Datenpaketen (P12) zwischen einer Basisstation (B) und mindestens einer Mobilstation (Mi), welches folgende Schritte aufweist:
(1) Übertragen eines ersten Teils (P1) eines Datenpakets (P12) mit einer vorgegebenen ersten Symbolrate (R1) bei einer ersten Übertragungsfrequenz (F1); und
(2) Übertragung eines zweiten Teils (P2) des Datenpakets (P12) mit einer zweiten Symbolrate (R2) bei einer zweiten Übertragungsfrequenz (F2).

15. Verfahren nach Anspruch 14,
**dadurch gekennzeichnet,**
- **daß** mit dem ersten Teil (P1) des Datenpakets (P12) Informationen über die zweite Symbolrate (R2) und insbesondere über die zweite Übertragungsfrequenz (F2) übertragen werden.

16. Verfahren nach Anspruch 14 oder 15,
**dadurch gekennzeichnet,**
- **daß** vor der Übertragung des zweiten Teils (P2) des Datenpakets (P12) ein Schutzzeitintervall (S) eingehalten wird.

17. Verfahren nach einem oder mehreren der Ansprüche 14 bis 16,
**dadurch gekennzeichnet,**
- **daß** die zweite Symbolrate (R2) größer als die erste Symbolrate (R1) ist.

18. Verfahren nach einem oder mehreren der Ansprüche 14 bis 17,
**dadurch gekennzeichnet,**
- **daß** die Basisstation (B) und die mindestens eine Mobilstation (Mi) jeweils mittels eines lokalen Oszillators (LO) senden und/oder empfangen.

19. Verfahren nach Anspruch 18,
**dadurch gekennzeichnet,**
- **daß** jeder lokale Oszillator (LO) jeweils mit einem Phasenregelkreis in Verbindung steht.

20. Verfahren nach einem oder mehreren der Ansprüche 14 bis 19,
**dadurch gekennzeichnet,**
- **daß** die Basisstation (B) und die mindestens eine Mobilstation (Mi) jeweils beim Empfang eines Datenpakets (P12) die Übertragungsfrequenz (F1, F2) filtern.

21. Verfahren nach einem oder mehreren der Ansprüche 14 bis 20,
**dadurch gekennzeichnet,**
- **daß** im ersten Teil (P1) des Datenpakets (P12) eine Identifizierungsinformation (CAC) zur Erkennung der Zusammengehörigkeit der Basisstation (B) und der mindestens einen Mobilstation (Mi) übertragen wird.

22. Verfahren nach einem oder mehreren der Ansprüche 14 bis 21,
**dadurch gekennzeichnet,**
- **daß** im ersten Teil (P1) des Datenpakets (P12) ein erster Datenpaketkopf (H1) übertragen wird.

23. Verfahren nach einem oder mehreren der Ansprüche 14 bis 22,
**dadurch gekennzeichnet,**
- **daß** zu Beginn des zweiten Teils (P2) des Datenpakets (P12) ein Synchronisationswort (SYNC) zur Synchronisation der Basisstation (B) mit der mindestens einen Mobilstation (Mi) auf die zweite Symbolrate (R2) übertragen wird.

24. Verfahren nach einem oder mehreren der Ansprüche 14 bis 23,
**dadurch gekennzeichnet,**
- **daß** im zweiten Teil (P2) des Datenpakets (P12) ein zweiter Datenpaketkopf (H2) und Nutzdaten (D) übertragen werden.

25. Verfahren nach einem oder mehreren der Ansprüche 14 bis 24,
**dadurch gekennzeichnet,**
- **daß** die Basisstation (B) und die mindestens eine Mobilstation (Mi) jeweils Zugriff auf einen Algorithmus zur Berechnung der Abfolge der ersten Übertragungsfrequenzen (F1) und auf einen Algorithmus zur Berechnung der zweiten Übertragungsfrequenzen (F2) haben.

26. Verfahren nach einem oder mehreren der Ansprüche 14 bis 25,
**dadurch gekennzeichnet,**
- **daß** das Verfahren
- in digitalen schnurlosen Kommunikationssystemen oder
- in Computer-gesteuerten Unterhaltungssystemen, insbesondere in Computer-gesteuerten Spielesystemen, oder
- in Systemen mit Echtzeitanforderungen eingesetzt wird.

## Claims

1. Data transmission system which has a base station (B) and at least one mobile station (Mi), between which data packets (P12) can be transmitted by radio using a time slot method, having
- first means for transmission of a first part (P1) of a data packet (P12) at a predetermined first symbol rate (R1) and at a first transmission frequency (F1), and
- second means for transmission of a second part (P2) of a data packet (P12) at a second symbol rate (R2) and at a second transmission frequency (F2).

2. Data transmission system according to Claim 1,
**characterized**
- **in that** the first part (P1) of the data packet (P12) contains information about the second symbol rate (R2) and, in particular, about the second transmission frequency (F2).

3. Data transmission system according to Claim 1 or 2,
**characterized by**
- third means for production of a guard time interval (S) between the first part (P1) and the second part (P2) of the data packet (P12).

4. Data transmission system according to one or more of the preceding claims,
**characterized**
- **in that** the second symbol rate (R2) is higher than the first symbol rate (R1).

5. Data transmission system according to one or more of the preceding claims,
**characterized**
- **in that** the base station (B) and the at least one mobile station (Mi) each have a local oscillator (LO).

6. Data transmission system according to Claim 5,
**characterized**
- **in that** each local oscillator (LO) is in each case connected to a phase locked loop.

7. Data transmission system according to one or more of the preceding claims,
**characterized**
- **in that** the base station (B) and the at least one mobile station (Mi) each have a filter for reception-end selection of the transmission frequency (F1, F2).

8. Data transmission system according to one or more of the preceding claims,
**characterized**
- **in that** the first means have means for production of identification information (CAC) for identification of the association between the base station (B) and the at least one mobile station (Mi).

9. Data transmission system according to one or more of the preceding claims,
**characterized**
- **in that** the first means have means for production of a first data packet head (H1).

10. Data transmission system according to one or more of the preceding claims,
**characterized**
- **in that** the second means have means for production of a synchronization word (SYNC) for synchronization of the base station (B) to the at least one mobile station (Mi) at the second symbol rate (R2).

11. Data transmission system according to one or more of the preceding claims,
**characterized**
- **in that** the second means have means for production of a second data packet head (H2), and means for transmission of payload data (D).

12. Data transmission system according to one or more of the preceding claims,
**characterized**
- **in that** an algorithm for calculation of the sequence of the first transmission frequencies (F1) and an algorithm for calculation of the second transmission frequency (F2) are respectively implemented in the base station (B) and in the at least one mobile station (Mi).

13. Data transmission system according to one or more of the preceding claims,
**characterized**
- **in that** Data transmission system can be used
- in digital cordless communications systems, or
- in computer-controlled entertainment systems, in particular computer-controlled games systems, or
- in systems with real-time requirements.

14. Method for radio transmission of data packets (P12) between a base station (B) and at least one mobile station (Mi), having the following steps:
(1) transmission of a first part (P1) of a data packet (P12) at a predetermined first symbol rate (R1) and at a first transmission frequency (F1); and
(2) transmission of a second part (P2) of the data packet (P12) at a second symbol rate (R2) and at a second transmission frequency (F2).

15. Method according to Claim 14,
**characterized**
- **in that** information about the second symbol rate (R2) and, in particular, about the second transmission frequency (F2) is transmitted with the first part (P1) of the data packet (P12).

16. Method according to Claim 14 or 15,
**characterized**
- **in that** a guard time interval (S) is complied with before the transmission of the second part (P2) of the data packet (P12).

17. Method according to one or more of Claims 14 to 16,
**characterized**
- **in that** the second symbol rate (R2) is higher than the first symbol rate (R1).

18. Method according to one or more of Claims 14 to 17,
**characterized**
- **in that** the base station (B) and the at least one mobile station (Mi) each transmit and/or receive by means of a local oscillator (LO).

19. Method according to Claim 18,
**characterized**
- **in that** each local oscillator (LO) is in each case connected to a phase locked loop.

20. Method according to one or more of Claims 14 to 19,
**characterized**
- **in that** the base station (B) and the at least one mobile station (Mi) in each case filter the transmission frequency (F1, F2) on reception on a data packet (P12).

21. Method according to one or more of Claims 14 to 20,
**characterized**
- **in that** identification information (CAC) for identification of the association between the base station (B) and the at least one mobile station (Mi) is transmitted in the first part (P1) of the data packet (P12).

22. Method according to one or more of Claims 14 to 21,
**characterized**
- **in that** a first data packet header (H1) is transmitted in the first part (P1) of the data packet (P12).

23. Method according to one or more of Claims 14 to 22,
**characterized**
- **in that** a synchronization word (SYNC) for synchronization of the base station (B) to the at least one mobile station (Mi) is transferred to the second symbol rate (R2) at the start of the second part (P2) of the data packet (P12).

24. Method according to one or more of Claims 14 to 23,
**characterized**
- **in that** a second data packet header (H2) and payload data (D) are transmitted in the second part (P2) of the data packet (P12).

25. Method according to one or more of Claims 14 to 24,
**characterized**
- **in that** the base station (B) and the at least one mobile station (Mi) respectively have access to an algorithm for calculation of the sequence of the first transmission frequencies (F1), and to an algorithm for calculation of the second transmission frequencies (F2).

26. Method according to one or more of Claims 14 to 25,
**characterized**
- **in that** Method is used
- in digital cordless communications systems, or
- in computer-controlled entertainment systems, in particular in computer-controlled game systems, or
- in systems with real-time requirements.

## Revendications

1. Système de transmission de données, qui comporte une station de base (B) et au moins une station mobile (Mi), entre lesquelles des paquets de données (P12) peuvent être transmis par radio selon un procédé à créneaux temporels, comprenant :
- des premiers moyens pour la transmission d'une première partie (P1) d'un paquet de données (P12) avec un premier débit de symboles prédéterminé (R1) à une première fréquence de transmission (F1), et
- des deuxièmes moyens pour la transmission d'une deuxième partie (P2) du paquet de données (P12) avec un deuxième débit de symboles (R2) à une deuxième fréquence de transmission (F2).

2. Système de transmission de données selon la revendication 1,
**caractérisé par le fait que**
- la première partie (P1) du paquet de données (P12) contient des informations sur le deuxième débit de symboles (R2) et notamment sur la deuxième fréquence de transmission (F2).

3. Système de transmission de données selon la revendication 1 ou 2,
**caractérisé par**
- des troisièmes moyens pour la production d'un intervalle de temps de garde (S) entre la première partie (P1) et la deuxième partie (P2) du paquet de données (P12).

4. Système de transmission de données selon l'une ou plusieurs des revendications précédentes,
**caractérisé par le fait que**
- le deuxième débit de symboles (R2) est supérieur au premier débit de symboles (R1).

5. Système de transmission de données selon l'une ou plusieurs des revendications précédentes,
**caractérisé par le fait que**
- la station de base (B) et la ou les stations mobiles (Mi) comportent chacune un oscillateur local (LO).

6. Système de transmission de données selon la revendication 5,
**caractérisé par le fait que**
- chaque oscillateur local (LO) est en liaison à chaque fois avec une boucle à verrouillage de phase.

7. Système de transmission de données selon l'une ou plusieurs des revendications précédentes,
**caractérisé par le fait que**
- la station de base (B) et la ou les stations mobiles (Mi) comportent chacune un filtre pour la sélection, côté réception, de la fréquence de transmission (F1, F2) .

8. Système de transmission de données selon l'une ou plusieurs des revendications précédentes,
**caractérisé par le fait que**
- les premiers moyens comportent des moyens pour la production d'une information d'identification (CAC) pour la reconnaissance de l'appartenance mutuelle de la station de base (B) et de la ou des stations mobiles (Mi).

9. Système de transmission de données selon l'une ou plusieurs des revendications précédentes,
**caractérisé par le fait que**
- les premiers moyens comportent des moyens pour la production d'un premier en-tête de paquet de données (H1).

10. Système de transmission de données selon l'une ou plusieurs des revendications précédentes,
**caractérisé par le fait que**
- les deuxièmes moyens comportent des moyens pour la production d'un mot de synchronisation (SYNC) pour la synchronisation de la station de base (B) avec la ou les stations mobiles (Mi) sur le deuxième débit de symboles (R2).

11. Système de transmission de données selon l'une ou plusieurs des revendications précédentes,
**caractérisé par le fait que**
- les deuxièmes moyens comportent des moyens pour la production d'un deuxième en-tête de paquet de données (H2) et des moyens pour la transmission de données utiles (D).

12. Système de transmission de données selon l'une ou plusieurs des revendications précédentes,
**caractérisé par le fait que,**
- dans la station de base (B) et dans la ou les stations mobiles (Mi), il est installé à chaque fois un algorithme pour le calcul de la séquence des premières fréquences de transmission (F1) et un algorithme pour le calcul de la deuxième fréquence de transmission (F2).

13. Système de transmission de données selon l'une ou plusieurs des revendications précédentes,
**caractérisé par le fait que**
- le système de transmission de données peut être utilisé :
- dans des systèmes de communication numériques sans fil, ou
- dans des systèmes de divertissement commandés par ordinateur, notamment des jeux sur ordinateurs, ou
- dans des systèmes ayant des exigences de temps réel.

14. Procédé pour la transmission par radio de paquets de données (P12) entre une station de base (B) et au moins une station mobile (Mi), qui comporte les étapes suivantes :
(1) transmission d'une première partie (P1) d'un paquet de données (P12) avec un premier débit de symboles prédéterminé (R1) à une première fréquence de transmission (F1) ; et
(2) transmission d'une deuxième partie (P2) du paquet de données (P12) avec un deuxième débit de symboles (R2) à une deuxième fréquence de transmission (F2).

15. Procédé selon la revendication 14,
**caractérisé par le fait que,**
- avec la première partie (P1) du paquet de données (P12), on transmet des informations sur le deuxième débit de symboles (R2) et notamment sur la deuxième fréquence de transmission (F2).

16. Procédé selon la revendication 14 ou 15,
**caractérisé par le fait que,**
- avant la transmission de la deuxième partie (P2) du paquet de données (P12), on respecte un intervalle de temps de garde (S).

17. Procédé selon l'une ou plusieurs des revendications 14 à 16,
**caractérisé par le fait que**
- le deuxième débit de symboles (R2) est supérieur au premier débit de symboles (R1).

18. Procédé selon l'une ou plusieurs des revendications 14 à 17,
**caractérisé par le fait que**
- la station de base (B) et la ou les stations mobiles (Mi) émettent et/ou reçoivent chacune au moyen d'un oscillateur local (LO).

19. Procédé selon la revendication 18,
**caractérisé par le fait que**
- chaque oscillateur local (LO) est en liaison à chaque fois avec une boucle à verrouillage de phase.

20. Procédé selon l'une ou plusieurs des revendications 14 à 19,
**caractérisé par le fait que**
- la station de base (B) et la ou les stations mobiles (Mi) filtrent à chaque fois lors de la réception d'un paquet de données (P12) la fréquence de transmission (F1, F2).

21. Procédé selon l'une ou plusieurs des revendications 14 à 20,
**caractérisé par le fait que,**
- dans la première partie (P1) du paquet de données (P12), on transmet une information d'identification (CAC) pour la reconnaissance de l'appartenance mutuelle de la station de base (B) et de la ou des stations mobiles (Mi).

22. Procédé selon l'une ou plusieurs des revendications 14 à 21,
**caractérisé par le fait que,**
- dans la première partie (P1) du paquet de données (P12), on transmet un premier en-tête de paquet de données (H1).

23. Procédé selon l'une ou plusieurs des revendications 14 à 22,
**caractérisé par le fait que,**
- au début de la deuxième partie (P2) du paquet de données (P12), on transmet un mot de synchronisation (SYNC) pour la synchronisation de la station de base (B) avec la ou les stations mobiles (Mi) sur le deuxième débit de symboles (R2).

24. Procédé selon l'une ou plusieurs des revendications 14 à 23,
**caractérisé par le fait que,**
- dans la deuxième partie (P2) du paquet de données (P12), on transmet un deuxième en-tête de paquet de données (H2) et des données utiles (D).

25. Procédé selon l'une ou plusieurs des revendications 14 à 24,
**caractérisé par le fait que**
- la station de base (B) et la ou les stations mobiles (Mi) ont chacune accès à un algorithme pour le calcul de la séquence des premières fréquences de transmission (F1) et à un algorithme pour le calcul de la deuxième fréquence de transmission (F2).

26. Procédé selon l'une ou plusieurs des revendications 14 à 25,
**caractérisé par le fait que**
- le procédé est utilisé :
- dans des systèmes de communication numériques sans fil, ou
- dans des systèmes de divertissement commandés par ordinateur, notamment des jeux sur ordinateurs, ou
- dans des systèmes ayant des exigences de temps réel.
